# EUROPEAN PATENT APPLICATION

(11) **EP 4 679 695 A1**
(43) Date of publication of application: **14.01.2026**
(21) Application number: 24187117.7
(22) Date of filing: 08.07.2024
(51) Int. Cl.: H02M 1/32, H02M 7/483, H02M 7/00

(54) **MODULAR CONVERTER CELL PROTECTION**

(71) Applicant: Hitachi Energy Ltd, 8050 Zürich (CH)
(72) Inventor: Augustin, Tim, 72359 Västerås (SE); Liu, Bochen, 72461 Västerås (SE); Nawaz, Muhammad, 19732 Bro (SE)
(74) Representative: AWA Sweden AB

(57) **Abstract**

The present disclosure relates to a converter cell comprising a first sub-cell (SB, SB1) and at least a second sub-cell (SB2, SB3, SB4), each sub-cell comprising: an energy storage module (ESM) comprising: a primary DC terminal (ESM+); a secondary DC terminal (ESM-), at least one power converter module (PCM); each sub-cell (SB, SB1, SB2, SB3, SB4) further comprising: a primary connection element (CE-1) configured to electrically connect a primary DC connection terminal (DC+) of the power converter module (PCM) with the primary DC terminal (ESM+) of said energy storage module (ESM); a secondary connection element (CE-2) configured to electrically connect a secondary DC connection terminal (DC-) of the power converter module (PCM) with the secondary DC terminal (ESM-) of said energy storage module (ESM); wherein the converter cell is configured to connect to a main connection element (30), and further configured to, in response to an internal fault such as a short-circuiting, isolate at least one sub-cell of the first sub-cell (SB, SB1) and said at least a second sub-cell (SB2, SB3, SB4) by means of at least one protection element at least adjustable from a closed circuit connection to an open circuit connection, wherein said at least one protection element includes: a primary protection element (12-1, 13-1, 14-1, 23-1, 24-1, 34-1) configured to, in closed circuit connection, electrically connect the primary connection element of said at least one sub-cell and the primary connection element of one other of said first sub-cell (SB, SB1) and said at least a second sub-cell (SB2, SB3, SB4). A modular power converter, method, and control unit are also disclosed.

## Description

### Technical Field

The invention relates to a converter cell, and in particular to a converter cell adapted with protection against an internal fault. The invention also relates to a modular power converter, a method of controlling a modular power converter in the event of an internal fault and a control unit configured to do the same.

### Background

Power converters are used for converting electrical energy from one electrical form to another, for instance, converting alternating current (AC) into direct current (DC) and vice versa; change the voltage of frequency of the current or do some combination of these. However, due to modern solutions gravitating towards increasing complexity in terms of converter cell design due to demands on redundancy, functionality, efficiency, etc., a focus has been to modular power converters, i.e., power converters with at least some modularity.

An aspect of modular power converters is related to how to protect the converter cells of a modular power converter against internal short-circuit faults. This is of particular interest for converter cells using Si-IGBT industrial power modules which, depending on model design, can have a very low stray inductance of 10 nH If the converter cells are not sufficiently protected, short-circuit currents can result in the industrial power module to explode. Industrial power modules benefit converter cell designs with multiple parallel power modules for cost-effective scaling for various current ratings. If a single power module fails, it affects the remaining healthy power modules as well and the converter cell cannot operate any longer.

One solution for managing short circuits is to bypass one or more faulty converter cells. This presumes implementation of a reliable method of accurately detecting short-circuiting and a fast control circuitry which can control activation of bypassing upon detection of short-circuiting.

In view of the above, it is of interest to provide a solution which alleviates at least some of the problems of currently available power converter solutions.

### Summary

It is an object of the present disclosure to provide an improved solution that alleviates the mentioned drawbacks with present solutions. Objects of the disclosure includes providing a converter cell, providing a modular power converter comprising at least one converter cell, providing a method of isolating a sub-cell of a converter cell if said sub-cell is subject to an internal fault, and providing a control unit. These objects are solved by one or more of the solutions defined in the claims. Additional advantageous embodiments are described in the following.

The disclosure is based on the inventors' realization that a modular power converter may be improved as follows. A modular power converter may comprise at least one converter cell. Said at least one converter cell comprises a plurality of sub-cells, wherein each sub-cell comprises of at least one power module connected in parallel with a capacitor. A sub-cell of the converter cell can experience an internal fault for random reasons, for instance incident cosmic rays. This can result in the sub-cell experiencing a short-circuit. For instance, one power module may be short-circuited, causing said power module to conduct when it should not. If one sub-cell is short-circuited, adjacent cells may effectively also be short-circuited and thus, the whole converter cell of a conventional modular power converter must be shut down. The solution of the present disclosure enables sub-cells to be individually isolated from adjacent cells, thereby removing the need to shut down a whole converter cell. This problem can be mitigated and potentially avoided by providing a converter cell with a plurality of sub-cells, wherein the converter cell is configured to enable said sub-cells to be individually isolated. Thereby, when one sub-cell is subject to an internal fault, such as a short circuiting, said sub-cell can be isolated and the remaining healthy sub-cells of the converter cell can continue to operate, thus allowing the modular power converter comprising at least one such converter cell to continue to operate albeit at a reduced operating efficacy. In order to isolate a sub-cell, at least one protection element is provided, wherein each protection element can be adjusted form a closed circuit connection to an open circuit connection. Said at least one protection element includes a protection element connected between said sub-cell and a second sub-cell. By adjusting at least one protection element to an open circuit connection, said sub-cell can thereby be isolated from any adjacent and healthy sub-cells. This concept is further expanded upon in the following, highlighting various aspects of the inventive concept, embodiments thereof, and any technical advantages they provide.

According to a first aspect, a converter cell is provided. The converter cell comprises: a first sub-cell and at least a second sub-cell. Each sub-cell comprises: an energy storage module and at least one power converter module. The energy storage module comprises a primary DC terminal and a secondary DC terminal. The at least one power converter module is at least electrically connectable to: a primary DC connection terminal, a secondary DC connection terminal, and at least a first AC connection terminal. Each sub-cell further comprises: a primary connection element and a secondary connection element. The primary connection element is configured to electrically connect the primary DC connection terminal of the power converter module with the primary DC terminal of said energy storage module. The secondary connection element is configured to electrically connect the secondary DC connection terminal of the power converter module with the secondary DC terminal of said energy storage module. The converter cell is configured to connect to a main connection element. The converter cell is further configured to, in response to an internal fault such as a short-circuiting, isolate at least one sub-cell of the first sub-cell and said at least a second sub-cell by means of at least one protection element at least adjustable from a closed circuit connection to an open circuit connection. Said at least one protection element includes: a primary protection element configured to, in closed circuit connection, electrically connect the primary connection element of said at least one sub-cell and the primary connection element of one other of said first sub-cell and said at least a second sub-cell. The converter cell may advantageously, by means of the at least one protection element, allow a faulty sub-cell to be isolated from the remaining healthy sub-cells, and thereby allow the converter cell to continue to operate, at least at a reduced power efficacy. Moreover, the at least one protection element advantageously allows scaling of the converter cell to a desired operational design. Moreover, the at least one protection element may advantageously co-operate with protective elements arranged internally of a sub-cell, for instance a bypass switch or a thyristor element arranged in parallel with the energy storage module.

The energy storage module may comprise at least one energy storage unit. The energy storage module may comprise a plurality of energy storage units, arranged in series and/or parallel. As a non-limiting example, the energy storage unit(s) may be a capacitor.

The converter cell may comprise any number of sub-cells more than one. As non-limiting examples, the converter cell may comprise two, three, four, five, six, seven, eight, nine, ten, or more sub-cells. Each sub-cell may be designed generally the same in terms of components and operation. One or more sub-cells may however be designed to be different from the other sub-cell(s) of the converter cell. The topology of one or more or each sub-cell may be anything implemented by connecting together power converter modules accordingly. As non-limiting examples, the power converter module of each sub-cell may be configured with half-bridge or full-bridge or single switch configuration. One or more or each of the sub-cell may comprise one power converter module or a plurality of power converter modules arranged in parallel with the energy storage module.

The primary connection element and the secondary connection element of one or more or each of the sub-cell(s) may be a busbar or busbar element. The main connection element may be a busbar or busbar element. Busbars may have lower resistance than cables. Hence the loss of energy due to transmission and distribution is lower in busbars. Busbars may also have a limited growth of reactive power to operate compared to cable systems

According to one embodiment, at least one of the at least one power converter module of at least one sub-cell is an IGBT-based power converter module, such as a Si-IGBT-based power converter module or a MOSFET-based power converter module, such as a SiC-MOSFET-based power converter module. As a non-limiting example, one or more or each of said at least one power converter module of one or more sub-cells may be a power converter module adapted with a suitable switching technology. As a non-limiting example, the converter cell may be adapted to comprise commercially available power converter modules such as LinPak-based power converter modules. However, the disclosure herein presented is not dependent on power converter module type, and may be power converter modules of any other suitable types depending on desired power rating.

According to one embodiment, at least one sub-cell comprises at least one additional power converter module, each of said at least one additional power converter module is at least electrically connectable to: a primary DC connection terminal, a secondary DC connection terminal, and at least a first AC connection terminal, wherein said power converter module of said at least one sub-cell and the at least one additional power converter module of said at least one sub-cell are connected in parallel. Said at least one additional power converter module may be adapted as said power converter module. Two or more power converter modules of a sub-cell may be arranged in parallel with the energy storage module.

According to one embodiment, said at least one protection element includes: a main protection element configured to, in closed circuit connection, electrically connect the main connection element and one of said at least a first AC connection terminal of said at least one sub-cell. By activating a main protection element, a sub-cell may also be isolated from the AC side.

According to one embodiment, at least a first AC connection terminal includes a first AC connection terminal and a second AC connection terminal. The second AC connection terminal may be provided by a secondary DC connection terminal or be connected thereto. In case of the power converter module is adapted with full-bridge configuration, the first and second AC connection terminals may be provided as terminals between switches of each leg in the full-bridge configuration.

According to one embodiment, said at least one protection element includes: a secondary protection element configured to, in closed circuit connection, electrically connect the secondary connection element of said at least one sub-cell and the secondary connection element of one other of said first sub-cell and said at least a second sub-cell. By activating a secondary protection element, isolation of a sub-cell from the DC side may be further enhanced.

According to one embodiment, said at least one main protection element and/or said at least one primary protection element and/or said at least one secondary protection element includes a protection element, which protection element is a single-use element, such as a fuse, a pyro switch, or a normally-on SiC JFET, or a multi-use element, such as a mechanical switch or a semiconductor switch.

According to one embodiment, said at least one primary protection element and/or said at least one secondary protection element comprises a protection element in series with a decoupling resistor and/or a decoupling impedance. By this, current and/or change of current may be controlled more accurately so that a protection element can be activated and prevent a fault of a sub-cell to propagate between sub-cells too quickly.

According to one embodiment, said at least one main protection element and/or said at least one primary protection element and/or said at least one secondary protection element includes protection elements of the same type. By this, manufacturing cost may be reduced. Moreover, maintenance may be facilitated.

According to one embodiment, at least one sub-cell is adapted to be protected by means of a crowbar thyristor connected in parallel with the energy storage module and/or a bypass switch connected between the first AC connection terminal and a second AC connection terminal and/or a fuse connected in series with the energy storage module.

According to one embodiment, at least one sub-cell is adapted to be protected by means of an explosion protective housing and/or at least two or more sub-cells are adapted to be protected by means of a common explosion protective housing. By this, sub-cells of a converter cell may be even further isolated so as to prevent propagation of fire and/or damages from an isolated sub-cell.

By at least one sub-cell being adapted to be protected by means of an explosion protective housing, it should be understood that at least one component of the sub-cell is arranged in said explosion protective housing. As a non-limiting example, at least one component of sub-cell may be arranged outside said explosion protective housing. The same applies in the case two or more sub-cells are adapted to be protected by means of a common explosion protective housing. As a non-limiting example, the energy storage module of a sub-cell may be arranged in said explosion protective housing. As a non-limiting example, the power converter module of a sub-cell may be arranged in said explosion protective housing. As a non-limiting example, a thyristor, if incorporated, may be arranged in said explosion protection housing. As a non-limiting example, any combination of the above components may be arranged in said explosion protective housing. Alternatively, only a sub-selection of said components may be arranged in said explosive protective housing, whereas the remaining components of a sub-cell is arranged outside said explosive protective housing.

According to embodiment, one or more of said at least one protection element is adapted to be controllable from said closed circuit connection to said open circuit connection in response to a control signal. By this, protection elements may be activated on command instead of reactively activating in response to voltage and/or current. Thereby, isolation of a sub-cell experiencing an internal fault such as a short-circuit can be carried out more rapidly.

According to one embodiment, at least one of said at least one power converter module of at least one sub-cell is adapted with a half-bridge configuration or a full-bridge configuration. However, it should be understood that the disclosure is not limited to only such configurations, other power converter module topologies may be implemented.

According to one embodiment, at least one of said at least one power converter module of at least one sub-cell comprises: a first switch connected between the primary connection terminal and the main connection terminal; a second switch connected in series with the first switch and connected between the main connection terminal and the secondary connection terminal; a first diode connected in anti-parallel with the first switch; a second diode connected in anti-parallel with the second switch. Two or more or all power converter modules may be adapted in this manner.

According to a second aspect, a modular power converter is provided. The modular power converter comprises at least one converter cell according to the first aspect or any embodiments thereof. The modular power converter may be configured for one phase application, two phase application, three phase application, or any higher phase applications. For each phase, the modular power converter may comprise a positive arm and a negative arm. An arm, such as said positive arm or said negative arm, for a phase may comprise at least one converter cell according to the first aspect or any embodiments thereof. Each arm may be adapted with any number of such converter cell, wherein the number of converter cells may depend for instance on application and desired redundancy or any other desired functionalities. As a non-limiting example, the modular power converter may be adapted as a modular multilevel converter, MMC. As a non-limiting example, the modular power converter may be adapted as a Y-Y MMC. As a non-limiting example, the modular power converter may be adapted as a cascaded H-bridge MMC/delta-connected MMC (a delta-connected MMC wherein cells in each link of comprises two or more cells with H-bridge configuration (full-bridge configuration).

According to a third aspect, a method is provided of isolating a sub-cell of a modular power converter according to the first aspect or any embodiments thereof. The method comprises: in the event of an internal fault of said sub-cell such as a short circuiting, isolating said sub-cell by: adjusting at least one primary protection element connected to said sub-cell from closed circuit connection to open circuit connection; optionally, adjusting a main protection element connected to said sub-cell from closed circuit connection to open circuit connection; optionally, adjusting at least one secondary protection element connected to said sub-cell from closed circuit connection to open circuit connection. The method may include adjusting said at least one primary protection element connected to said sub-cell from closed circuit connection to open circuit connection in combination with adjusting said main protection element and said at least one secondary protection element to open circuit connection. By adjusting one or more protection elements in the manner above, isolation of a sub-cell may be provided or enhanced, which is advantageous for allowing a faulty sub-cell to be isolated from the remaining healthy sub-cells, and thereby allow the modular power converter to continue to operate, at least at a reduced power efficacy.

According to one embodiment, the method comprises: detecting an internal fault, such as a short-circuit, of said sub-cell, wherein said step of isolating said sub-cell comprises: controlling, based on a detection of said internal fault of said sub-cell, at least one protection element of said primary connection element to adjust said at least one protection element from closed circuit connection to open circuit connection.

According to one embodiment, said step of isolating said sub-cell comprises: adjusting, in response to a short circuit, at least one protection element of said primary protection element to adjust said at least one protection element to said open circuit connection.

According to a fourth aspect, a control unit is provided. The control unit is configured to: receive a signal at least indicating an internal fault, such as a short-circuit, of a sub-cell of a modular power converter. The modular power converter may be a modular power converter according to the first aspect or any embodiments thereof. The control unit is configured to: in response to said signal, carry out the method according to the second aspect or any embodiments thereof. As a non-limiting example, said signal may be an electrical signal, an optical signal, a wireless signal, or the like. As a non-limiting example, sub-cells of the converter cell may be operated synchronously. Thus, the control unit may be configured to control sub-cells of a converter cell of the present disclosure in a synchronous manner. Sub-cells of a converter cell of the present disclosure may be seen as being connected in parallel and adapted to be individually isolated under fault conditions. However, a control unit may be configured to control sub-cells of a converter cell according to the present disclosure non-synchronously.

According to a fifth aspect, a computer program is provided. The computer program comprises instructions which, when the program is executed by a computer, cause the computer to carry out the method according to the third aspect or any embodiments thereof.

According to a sixth aspect, a computer-readable storage medium is provided. The computer-readable storage medium comprises instructions which, when executed by a computer, cause the computer to carry out the method according to the third aspect or any embodiments thereof.

Effects and features of the second and third and fourth and fifth and sixth aspects are largely analogous to those described above in connection with the first aspect. Embodiments mentioned in relation to the first aspect are largely compatible with the second and third and fourth and fifth and sixth aspects. It is further noted that the inventive concepts relate to all possible combinations of features unless explicitly stated otherwise.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a schematic illustration of a converter cell according to one embodiment of the invention;
Fig. 2 shows a schematic illustration of a sub-cell of a converter cell according to one embodiment of the invention;
Fig. 2A shows a schematic illustration of a sub-cell of a converter cell according to one embodiment of the invention;
Figs. 3a-3b shows an illustration of a converter cell according to one embodiment of the invention;
Figs. 4a-4d show schematic illustrations of a sub-cell of a converter cell according to one embodiment of the invention;
Fig. 5 shows a schematic illustration of a plurality of sub-cells of a converter cell according to one embodiment of the invention;
Fig. 6a shows a front view of a plurality of sub-cells of a converter cell according to one embodiment of the invention;
Fig. 6b shows a left side view of a plurality of sub-cells of a converter cell according to one embodiment of the invention;

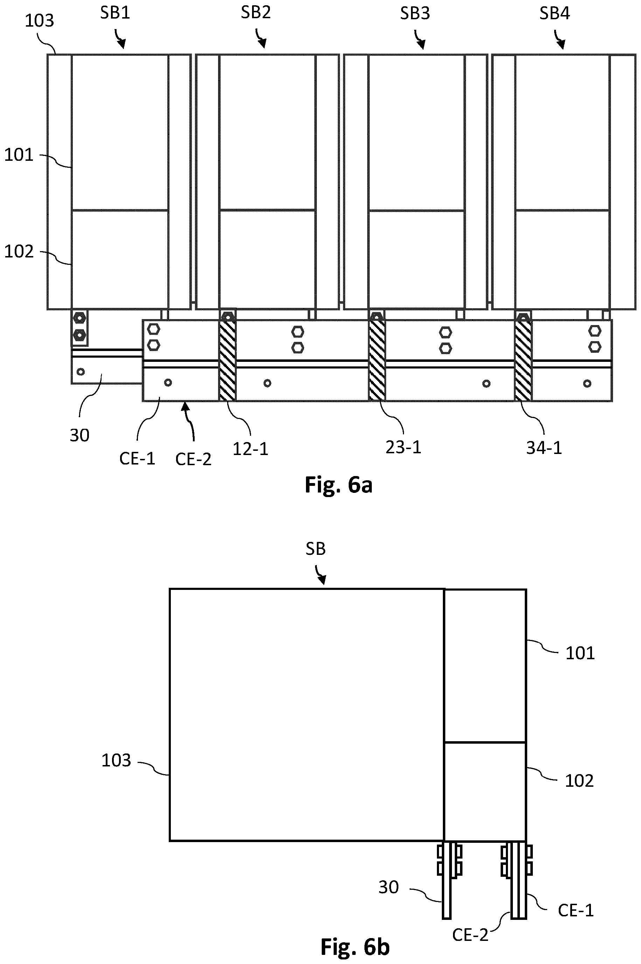

Fig. 6a shows a front view of a plurality of sub-cells of a converter cell according to one embodiment of the invention;
Fig. 6b shows a left side view of a plurality of sub-cells of a converter cell according to one embodiment of the invention;

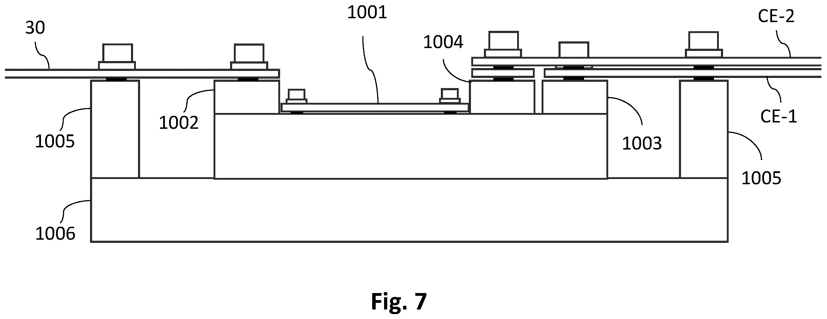

Fig. 7 shows a side view of a power module of a sub-cell of a converter cell according to one embodiment of the invention;

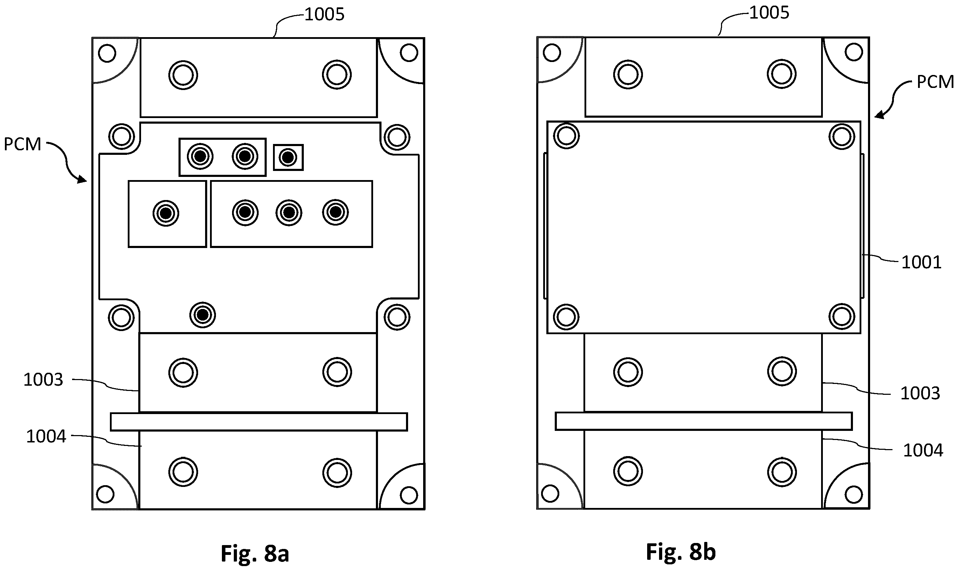

Figs. 8a-8b show top views of a power module of a sub-cell of a converter cell according to one embodiment of the invention;

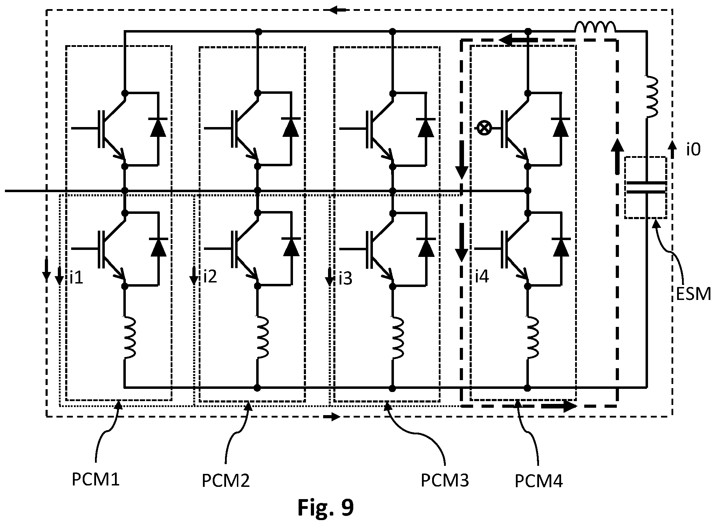

Fig. 9 shows a schematic illustration of a plurality of power modules arranged in parallel with a capacitor;

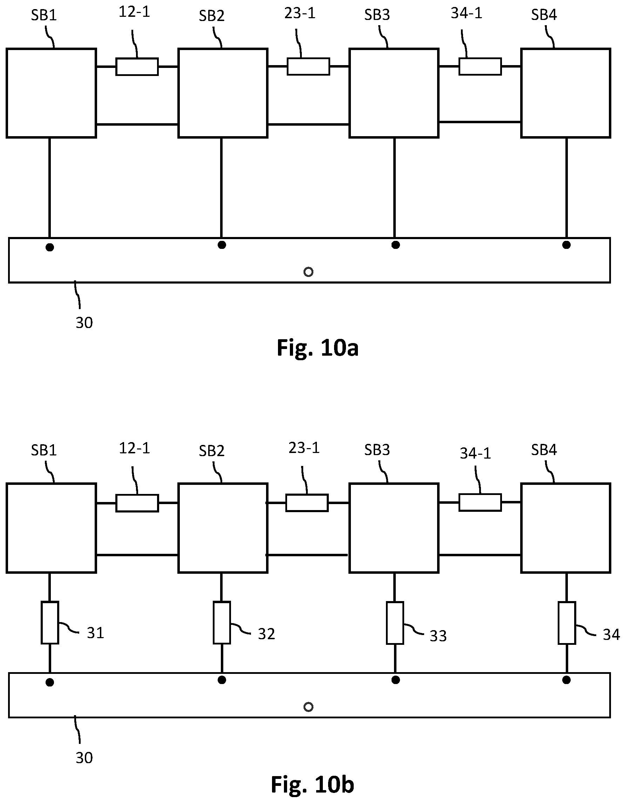

Figs. 10a-10b shows schematic illustrations of a converter cell according to one embodiment of the invention;

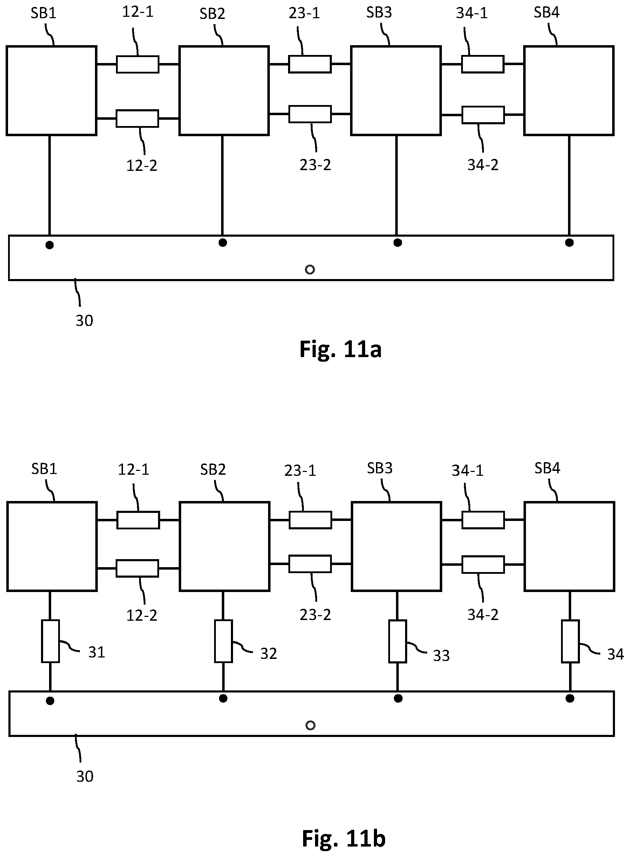

Figs. 11a-11b shows schematic illustrations of a converter cell according to one embodiment of the invention;

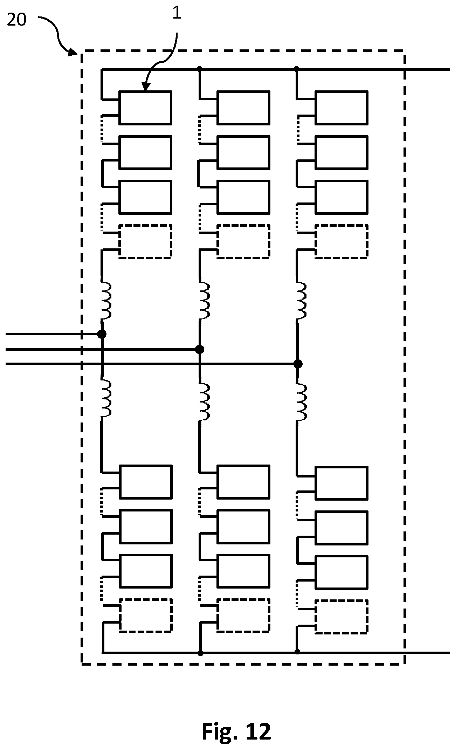

Fig. 12 shows a modular power converter according to one embodiment of the invention;

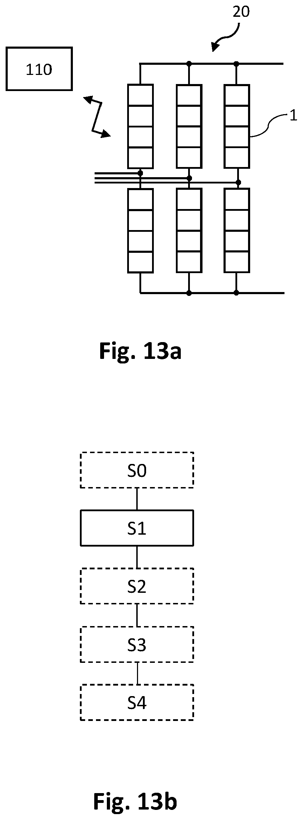

Fig. 13a shows a modular power converter and a control unit according to one embodiment of the invention;
Fig. 13b shows a flow-chart of a method according to one embodiment of the invention;

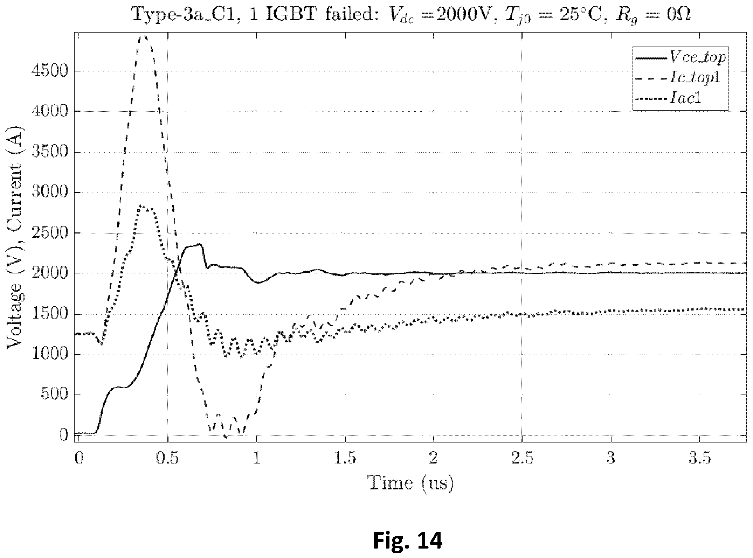

Fig. 14 shows a graph of voltage and current following a short circuit of a sub-cell of a modular power converter according to one embodiment of the invention.

### Description of Embodiments

Hereinafter, the principle of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

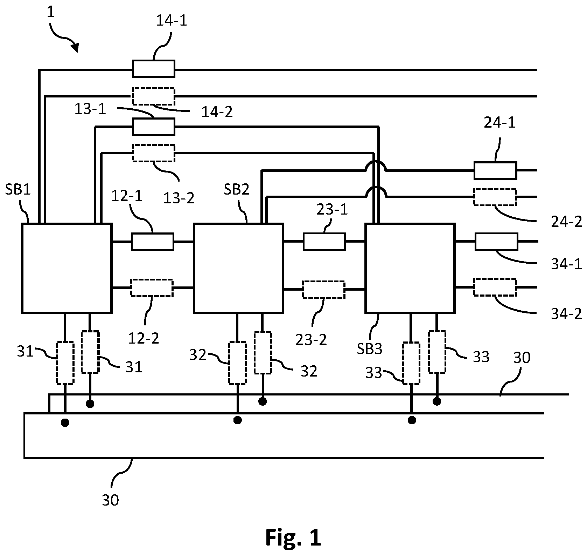

Fig. 1 shows a schematic illustration of a converter cell 1 according to one embodiment of the invention. The converter cell 1 comprises a first sub-cell SB1 and at least a second sub-cell SB2, SB3. The converter cell 1 may comprise any number N of sub-cells equal to or greater than 2. The number of sub-cells may be selected depending on application and/or intended power rating and/or space constraints.

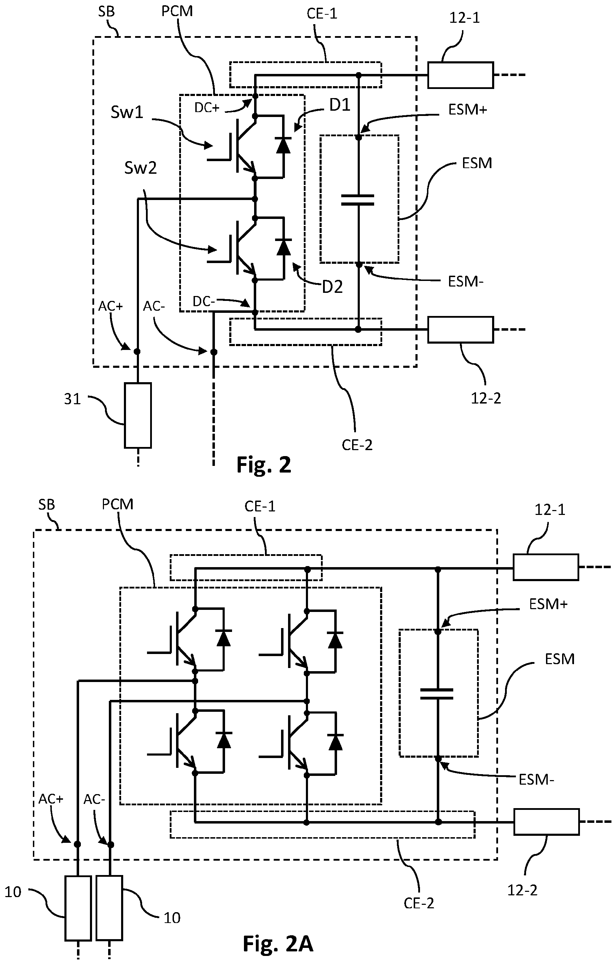

Fig. 2 shows a schematic illustration of a sub-cell of a converter cell 1 according to one embodiment of the invention. Each sub-cell SB1, SB2, SB3 comprises an energy storage module ESM for storing energy. The energy storage module ESM comprising a primary DC terminal ESM+ and a secondary DC terminal ESM-. The energy storage module ESM further comprises an energy storage unit by which the energy storage module ESM stores energy. The energy storage module ESM may comprise a plurality of energy storage units arranged in series and/or parallel. As an example, the energy storage unit may be a capacitor.

As further shown in Fig. 2, each sub-cell SB1, SB2, SB3 comprises at least one power converter module PCM. The power converter module PCM is at least electrically connectable to a primary DC connection terminal DC+, a secondary DC connection terminal DC-, a first AC connection terminal AC+ and a second AC connection terminal AC-. The second AC connection terminal AC-may be connected to said secondary DC connection terminal DC- or be provided by said secondary DC connection terminal DC-. Moreover, the power converter module PCM may comprise a first switch Sw1. The power converter module PCM may comprise a second switch Sw2. The first switch Sw1 and the second switch Sw2 may be arranged in series. The first AC connection terminal may be electrically provided between the first switch Sw1 and the second switch Sw2. The power converter module PCM may comprise a first diode D1. The first diode D1 may be arranged in parallel with the first switch Sw1, such as arranged in anti-parallel with the first switch Sw1. The power converter module PCM may comprise a second diode D2. The second diode D2 may be arranged in parallel with the second switch Sw2, such as arranged in anti-parallel with the second switch Sw2.

Each sub-cell further comprises a primary connection element CE-1. The primary connection element CE-1 is configured to electrically connect the primary DC connection terminal DC+ of the power converter module PCM with the primary DC terminal ESM+ of said energy storage module ESM. Each sub-cell further comprises a secondary connection element CE-2 configured to electrically connect the secondary DC connection terminal DC- of the power converter module PCM with the secondary DC terminal ESM- of said energy storage module ESM. The primary connection element CE-1 may be a busbar element, and may be referred to as a primary DC busbar element or a primary DC busbar. The secondary connection element CE-2 may be a busbar element, and may be referred to as a secondary DC busbar element or a secondary DC busbar.

As a non-limiting example, and applicable to any aforementioned embodiments, the primary connection element CE-1 and the secondary connection element CE-2 between any sub-cells may be provided by a laminated busbar wherein two busbar elements are arranged together with a laminating material between the two busbar elements. If the laminating material is not a material providing electrical insulation, an insulation material may be provided between the two busbar elements as well. Moreover, more than two busbar elements may be laminated together in the manner as detailed above.

As shown in Fig. 1, the converter cell 1 is configured to connect to a main connection element 30. The converter cell 1 is further configured to, in response to an internal fault such as a short-circuiting, isolate at least one sub-cell of the first sub-cell SB1 and said at least a second sub-cell SB2, SB3 by means of at least one protection element at least adjustable from a closed circuit connection to an open circuit connection. Said at least one protection element includes: a primary protection element 12-1, 13-1, 14-1, 23-1, 24-1, 34-1 configured to, in closed circuit connection, electrically connect the primary connection element of said at least one sub-cell and the primary connection element of one other of said first sub-cell and said at least a second sub-cell SB2.

The converter cell may comprise a first primary protection element 12-1 configured to, in closed circuit connection, electrically connect the primary connection element CE-1 of the first sub-cell SB1 and the primary connection element CE-1 of the second sub-cell SB2. The converter cell may comprise a second primary protection element 23-1 configured to, in closed circuit connection, electrically connect the primary connection element CE-1 of the second sub-cell SB2 and the primary connection element CE-1 of the third sub-cell SB3. The converter cell may comprise a third primary protection element 13-1 configured to, in closed circuit connection, electrically connect the primary connection element CE-1 of the first sub-cell SB1 and the primary connection element CE-1 of the third sub-cell SB3. The converter cell may be configured so that a primary connection element CE-1 of one sub-cell is connected with respective primary connection element CE-1 of one or more other sub-cells SB2, SB3 by means of a respective primary protection element 12-1, 13-1, 23-1, 14-1, 24-1, 34-1.

As an example, said at least one protection element may include a main protection element 31, 32, 33 configured to, in closed circuit connection, electrically connect the main connection element 30 and the first AC connection terminal AC+ of said at least one sub-cell SB1, SB2, SB3. As shown in Fig. 1, a first main protection element 31 may, in closed circuit connection, electrically connect the main connection element 30 and the first AC connection terminal AC+ of the first sub-cell SB1. A second main protection element 32 may, in closed circuit connection, electrically connect the main connection element 30 and the first AC connection terminal AC+ of the second sub-cell SB2. A third main protection element 33 may, in closed circuit connection, electrically connect the main connection element 30 and the first AC connection terminal AC+ of the third sub-cell SB3. The converter cell may comprise one or more further main protection element configured to, in closed circuit connection, electrically connect a main connection element 30 and a respective AC connection terminal AC+, AC- of one or more further sub-cells. The converter cell may comprise two or more further main protection elements configured to, in closed circuit connection, electrically connect a first main connection element 30 and a second main connection element 30 to respective AC connection terminals AC+, AC- of one or more further sub-cells.

Moreover, said at least one protection element may include a secondary protection element 12-2, 13-2, 23-2, 14-1, 24-2, 34-2 configured to, in closed circuit connection, electrically connect the secondary connection element CE-2 of said at least one sub-cell and the secondary connection element CE-2 of one other of said first sub-cell SB1 and said at least a second sub-cell SB2, SB3. The converter cell may comprise a first secondary protection element 12-2 configured to, in closed circuit connection, electrically connect the secondary connection element CE-2 of the first sub-cell SB1 and the secondary connection element CE-2 of the second sub-cell SB2. The converter cell may comprise a second secondary protection element 23-2 configured to, in closed circuit connection, electrically connect the secondary connection element CE-2 of the second sub-cell SB2 and the secondary connection element CE-2 of the third sub-cell SB3. The converter cell may comprise a third secondary protection element 13-2 configured to, in closed circuit connection, electrically connect the secondary connection element CE-2 of the first sub-cell SB1 and the secondary connection element CE-2 of the third sub-cell SB3. The converter cell may be configured so that a secondary connection element CE-2 of one sub-cell SB1 is connected with respective secondary connection element CE-2 of one or more other sub-cells SB2, SB3, SB4 by means of a respective secondary protection element 12-2, 13-2, 23-2, 14-2, 24-2, 34-2.

Fig. 2A shows a schematic illustration of a sub-cell of a converter cell according to one embodiment of the invention, wherein the power converter module is configured with full-bridge configuration.

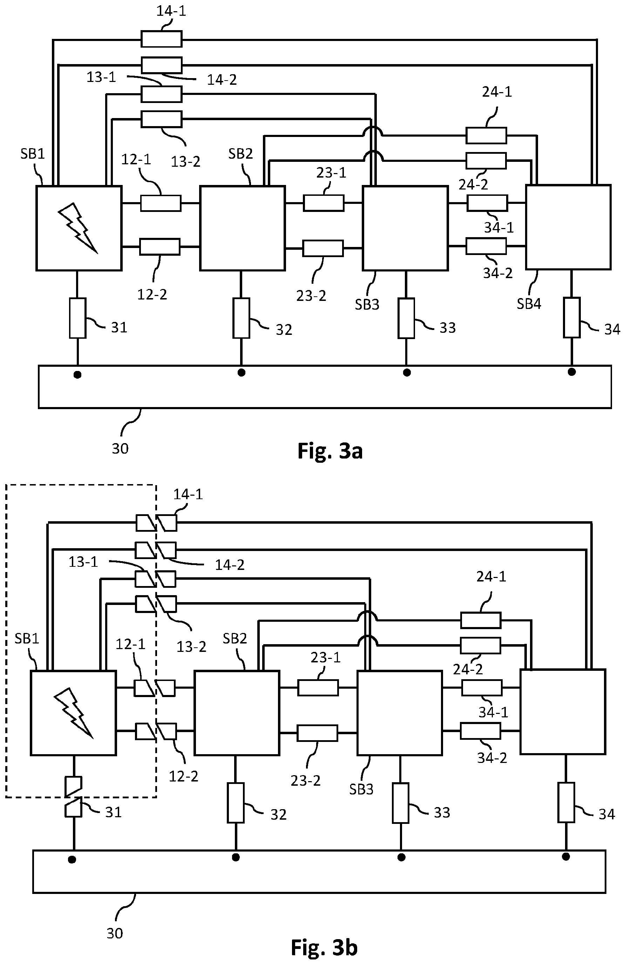

Figs. 3a-3b show an illustration of a converter cell 1 according to one embodiment of the invention. The converter cell comprises four sub-cells SB1, SB2, SB3, SB4. The converter cell comprises a plurality of primary protection elements 12-1, 13-1, 14-1, 23-1, 24-1, 34-1, each primary protection element connected between respective primary connection elements CE-1 of two sub-cells. The converter cell comprises a plurality of secondary protection elements 12-2, 13-2, 14-2, 23-2, 24-2, 34-2, each primary protection element connected between respective primary connection elements CE-2 of two sub-cells. The converter cell comprises a plurality of main protection elements 31, 32, 33, 34 connected between the main connection element 30 and respective AC connection terminal AC of each sub-cell SB1, SB2, SB3, SB4.

As indicated in Fig. 3a, the first sub-cell SB1 experiences an internal fault, such as a short-circuiting. If the internal fault is such that the first sub-cell SB1 should preferably be isolated from the other sub-cells SB2, SB3, SB4. In response to the internal fault, as indicated in Fig. 3b, said at least one protection element is adjusted from a closed circuit connection to an open circuit connection. Specifically, the first main protection element 31 is adjusted from a closed circuit connection to an open circuit connection. The primary protection elements 12-1, 13-1, 14-1 may also be adjusted from a closed circuit connection to an open circuit connection. The secondary protection elements 12-2, 13-2, 14-2 may also be adjusted from a closed circuit connection to an open circuit connection. Thereby, the first sub-cell SB1 is isolated from the other sub-cells SB2, SB3, SB4 and the converter cell can continue to operate with the remaining non-faulty sub-cells. The primary connection element CE-1 and the secondary connection element CE-2 of each sub-cell may be and/or include a DC busbar. The main connection element 30 may be an AC busbar.
The first main connection element 30 may be an AC busbar. The second main connection element 30 may be an AC busbar.

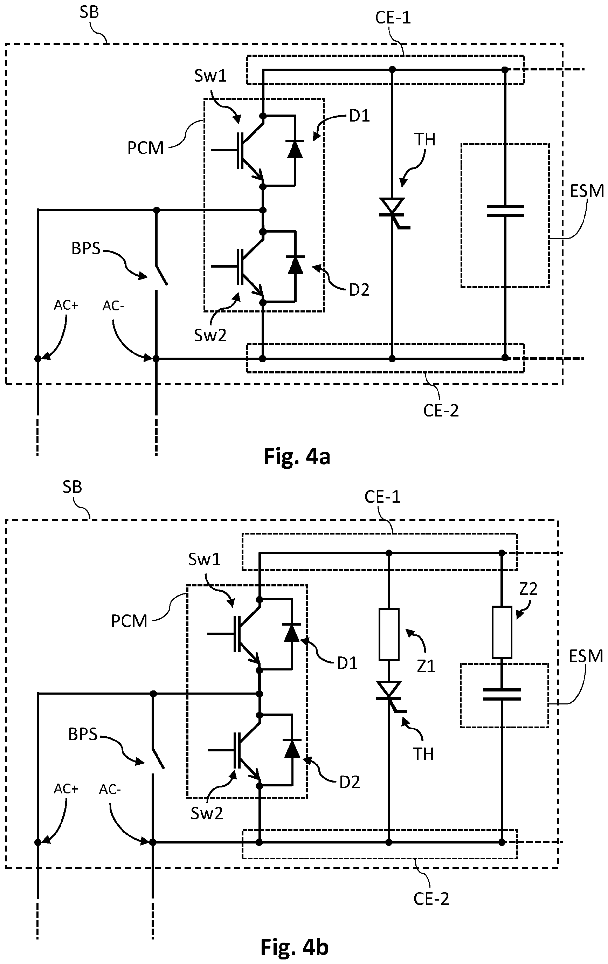

Fig. 4a shows a sub-cell of the converter cell according to one embodiment of the invention. Any of the sub-cells of the converter cell may comprise, as illustrated in Fig. 4a, a thyristor TH arranged in parallel with the energy storage module ESM. Further, the converter cell may comprise a bypass switch BPS arranged in parallel with the second switch Sw2. Thereby, the sub-cell SB offers more alternatives in response to an internal fault. As an example, the thyristor TH may be activated. The thyristor TH may be oriented depending on whether it is forward blocking, forward conducting, or reverse blocking. When activated, it enables the energy storage module ESM to discharge. As an example, the bypass switch BPS may be activated to bypass the sub-cell SB. The sub-cell SB may further comprise a second AC connection terminal AC-, thereby enabling further connection options. As a non-limiting example, a converter cell of the present disclosure, or any sub-cell thereof, may be adapted so as to enable bypassing of AC terminals of the converter cell or any sub-cell thereof.

Fig. 4b shows an alternative sub-cell design wherein the thyristor TH is arranged in series with a first impedance element Z1 and the energy storage module ESM is arranged in series with a second impedance element Z2.

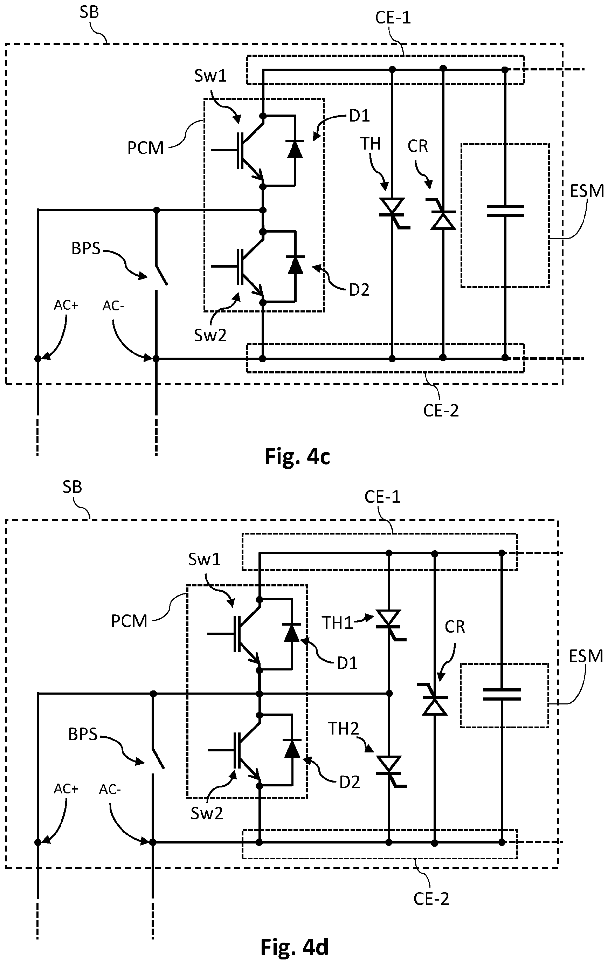

Fig. 4c and Fig. 4d show further embodiments of the sub-cell design. In Fig. 4c, a reverse crowbar device CR is illustrated. The diodes D1 and D2 may carry large currents with the activation of the thyristor TH during a cell shoot-through fault, reducing the reliability/lifetime of the diodes D1, D2 after such an event. In order to not damage the antiparallel diodes D1, D2, and thus ensure the cell can be reliably bypassed, the reverse crowbar device CR is provided. The reverse crowbar device CR is antiparallel to the thyristor TH. The reverse crowbar device CR may be a one-directional reverse semiconductor crowbar device CR (e.g., comprising a diode). Thus, the reverse crowbar device CR is connected across the energy storage module ESM as well as the power converter module PCM. When conducting, the reverse crowbar device CR is arranged to conduct in an opposite direction of the direction in which the thyristor is able to conduct (when conducting). Thus, the reverse crowbar device CR is able to handle at least some of the current during a negative half cycle of resonance after a shoot-through fault when the energy storage module is short circuited, taking some of the current load from the antiparallel diodes D1, D2. The reverse crowbar device CR is herein exemplified as a diode, e.g., a presspack diode, but any other suitable reverse-blocking semiconductor device may alternatively be used. A presspack diode may be added in parallel to the energy storage module ESM to reduce the surge current rating of the diodes D1, D2. During the negative half cycle of resonance, the current is split between the diodes D1, D2 and the reverse crowbar CR placed across the energy storage module ESM. Only one reverse crowbar device, e.g., diode, CR may needed across the energy storage module, which may result in that most of the current flows through the added reverse crowbar device, which helps to increase the reliability/lifetime of the diodes D1, D2 after such an event. The proposed crowbar device CR may be combined with a split thyristor comprising at least a first thyristor and a second thyristor connected in series. In Fig. 4d, a split thyristor TH is provided by a first thyristor TH1 and a second thyristor TH2 in series. A terminal between the first thyristor TH1 and the second thyristor TH2 is electrically connected to the first AC terminal AC+.

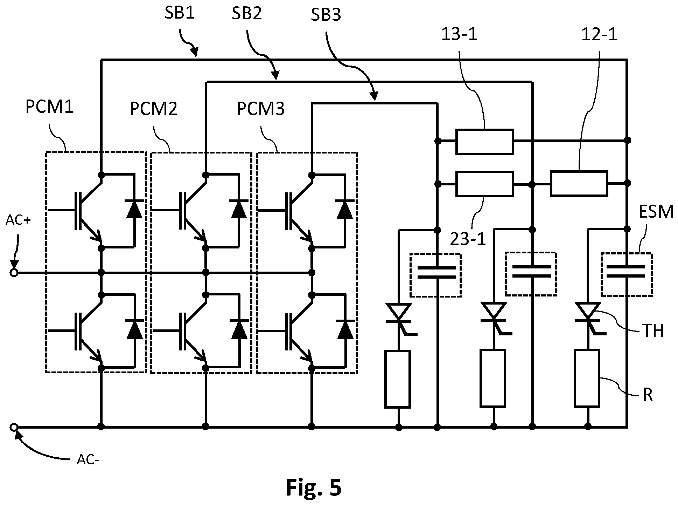

Fig. 5 shows a schematic illustration of a converter cell comprising three sub-cells SB1, SB2, SB3. Each sub-cell SB1, SB2, SB3 comprises a power converter module PCM1, PCM2, PCM3. Each sub-cell comprises an energy storage module ESM. Each sub-cell comprises a thyristor TH and a resistor R arranged in series with the thyristor TH. The converter cell further comprises a first primary protection element 12-1 connected between a primary connection element of the first sub-cell SB1 and a primary connection element of the second sub-cell SB2. The converter cell further comprises a second primary protection element 23-1 connected between a primary connection element of the second sub-cell SB2 and a primary connection element of the third sub-cell SB3. The converter cell further comprises a third primary protection element 13-1 connected between a primary connection element of the first sub-cell SB1 and a primary connection element of the third sub-cell SB3. The primary connection element of the first sub-cell, the second sub-cell, and the third sub-cell are not shown. Likewise, the secondary connection element of the first sub-cell, the second sub-cell, and the third sub-cell are not shown.

Fig. 6a shows a plurality of sub-cells SB1, SB2, SB3, SB4. Fig. 6b shows a side view of a sub-cell SB. Components of each sub-cell are provided in respective housings 101, 102, 103. A sub-cell according to the present disclosure may comprise a thyristor. The thyristor may be arranged in a first housing 101. A sub-cell according to the present disclosure may comprise a power converter module. The power converter module may be arranged in a second housing 102. A sub-cell according to the present disclosure may comprise an energy storage module. The energy storage module may be arranged in a third housing 103. Each sub-cell of a converter cell may be adapted with such housings to house various components of a sub-cell. As a non-limiting example, one or more of said housings 101, 102, 103 may be explosion-protective housing. Explosion-protective housings may be adapted to primarily contain an explosion. Explosion-protective housings may be adapted to primarily absorb energy from an explosion. Moreover, two or more or all sub-cells of a converter cell may be housed in a common explosion protective housing (not shown). As a non-limiting example, two or more or all thyristors from different sub-cells may be arranged in a common explosion protective housing. In the case where all thyristors are arranged in this manner, this would be illustrated in Fig. 6a as a single housing 101 extending from the first sub-cell SB1 to the fourth sub-cell SB4. Similarly, two or more or all converter power modules of different sub-cells may be arranged in a common explosion protective housing. In the case where all power converter modules are arranged in this manner, this would be illustrated in Fig. 6a as a single housing 102 extending from the first sub-cell SB1 to the fourth sub-cell SB4.
Similarly, two or more or all energy storage modules of different sub-cells may be arranged in a common explosion protective housing. In the case where all energy storage modules are arranged in this manner, this would be illustrated in Fig. 6a as a single housing 103 extending from the first sub-cell SB1 to the fourth sub-cell SB4. A further embodiment includes arranging combinations of various components of the same sub-cell in a common housing, for instance, the energy storage module and a power converter module may be arranged in a common housing. A still further embodiment includes arranging combinations of various components of different sub-cells in a common housing, for instance the energy storage module and the power converter module of each sub-cell may be arranged in a common housing. The same principle applies to any combination of thyristor, energy storage module, and power converter module of the various sub-cells.

Moreover, the sub-cells SB1-SB4 being connected to a main connection element 30, which in Fig. 6a is exemplified as a busbar element. Also, the sub-cells SB1-SB4 are connected to respective primary connection elements CE-1 and respective secondary connection elements CE-2, In Fig. 6a, the primary connection elements CE-1 and the secondary connection elements CE-2 are exemplified as a laminated DC busbar configured with a plurality of primary protection elements 12-1, 23-1, 34-1 which can be adjusted to open circuit connection so as to isolate a sub-cell from adjacent sub-cells.

Fig. 7 shows a schematic side view of a power converter module. The power module comprises a gate driver board 1001 and connection means 1002, 1003, 1004 for connecting to a respective connection element 30, CE-1, CE-2. A main connection means 1002 electrically connects the power converter module with the main connection element 30. The main connection element 30 may be a busbar element. A primary connection means 1003 electrically connects the power converter module with the primary connection element CE-1. A secondary connection means 1004 electrically connects the power converter module with the secondary connection element CE-2. The power converter module is attached to a heat sink element 1006. Support elements 1005 are attached to the heat sink element 1006 and support the main connection element 30, the primary connection element CE-1 and the secondary connection element CE-2.

Figs. 8a-8b show a top view of the power converter module. In Fig. 8b, the gate driver board 1001 is arranged to the body of the power converter module wherein electrical components thereof are omitted from the illustration. It should however be understood that the gate driver board may be adapted in various ways to control the power converter module. In Fig. 8a, the gate driver board is omitted from view, showing various non-limiting exemplary connections to the power converter module PCM.

Fig. 9 shows a schematic illustration of a sub-cell of a converter cell. The sub-cell comprises a plurality of power converter modules arranged in parallel with an energy storage module ESM. The plurality of power converter modules includes a first power converter module PCM1, a second power converter module PCM2, a third power converter module PCM3, a fourth power converter module PCM4. Although the sub-cell is illustrated with four power converter modules arranged in parallel, a sub-cell of the disclosure is not limited to four power converter modules arranged in parallel. A sub-cell could comprise only one power converter module. A sub-cell may comprise any number of power converter modules arranged in parallel with the energy storage module ESM.

Moreover, Fig. 9 illustrates that one of the switches of the fourth power converter module experiences a fault so that it no longer operates as intended. As a consequence, current distribution becomes asymmetric between the power converter modules, so that a current i4 flowing through the power converter module PCM4 is larger than currents i1-i3 flowing through the other power converter modules. This asymmetric failure moreover impacts adjacent power converter modules, thereby causing them to conduct a higher current and increasing the risk of additional failures. As a result, it is desirable to isolate the sub-cell from adjacent sub-cells using the method of the present disclosure. Generally, a current in faulty parts is always bigger than in healthy parts of a converter cell. Moreover, during normal operations, there will normally not flow power between adjacent sub-cells, and thus the cross current in busbar between sub-cells is negligible. However, during a fault, a sub-cell stops working as intended, resulting in power beginning to flow between sub-cells and a non-negligible cross-current occurs. This cross-current may stress the adjacent sub-cells, thereby introducing a risk of a fault propagating from a faulty sub-cell to an additional sub-cell. Moreover, the anomaly of cross-current flow can also be detected.

Figs. 10a-10b and Figs. 11a-11b show alternative configurations of a converter cell according to the disclosure. Fig. 10a shows a converter cell comprising a plurality of sub-cells SB1, SB2, SB3, SB4. Each sub-cell is electrically connected via an AC connection terminal to a main connection element, which in Figs. 10a-10b and Figs. 11a-11b is exemplified as a busbar 30. Moreover, the converter cell comprises a plurality of protection elements 12-1, 23-1, 34-1, arranged respectively between two primary connection elements of two sub-cells. Although not shown, additional protection elements may be provided so as to establish electrical connection between a primary connection element of a first sub-cell and a primary connection element of any of the other sub-cells. Fig. 10b shows a converter cell further comprising additional protection elements 31, 32, 33, 34 arranged between an AC connection terminal of each sub-cell SB1, SB2, SB3, SB4 and the main connection element 30.

Fig. 11a shows a converter cell comprising a first plurality of protection elements 12-1, 23-1, 34-1, arranged respectively between two primary connection elements of two sub-cells. Although not shown, additional protection elements may be provided so as to establish electrical connection between a primary connection element of a first sub-cell and a primary connection element of any of the other sub-cells. The converter cell may comprise a second plurality of protection elements 12-2, 23-2, 34-2 arranged respectively between two secondary connection elements of two sub-cells. Although not shown, additional protection elements may be provided so as to establish electrical connection between a secondary connection element of a first sub-cell and a secondary connection element of any of the other sub-cells. Fig. 11b shows a converter cell further comprising additional protection elements 31, 32, 33, 34 arranged between an AC connection terminal of each sub-cell SB1, SB2, SB3, SB4 and the main connection element 30.

The converter cell may be controllable by means of a control unit 40. The control unit 40 may be configured to receive a signal at least indicating an internal fault, such as a short-circuit, of a sub-cell of a converter cell as herein disclosed. The control unit may be configured to, in response to said signal, carry out the method of isolating a sub-cell as herein disclosed.

Fig. 12 shows a modular power converter 20 according to the disclosure. The modular power converter 20 is adapted with a positive arm and a negative arm for each phase, the total number of phases being three. However, it should be understood that the present disclosure as such is not limited to this particular example of modular power converter design. Each arm, be it positive arm or negative arm for each phase, comprises at least one converter cell 1 according to the present disclosure. The number of converter cells 1 in each arm may be selected depending on application, desired redundancy, and/or desired functionalities.

Fig. 13a illustrates a modular power converter 20 and a control unit 110 according to aspects of the present disclosure. The control unit 110 may be configured to carry out a method of isolating a sub-cell SB1 of a converter cell 1. Such a method is detailed in the following. The control unit 110 may comprise processing means, such as a processing unit, configured to, based on input, control at least one sub-cell of a converter cell and/or at least one protection element as herein disclosed. The control unit 110 may comprise receiving means for receiving at least one input. Said input may include data indicating one or more operational parameters of at least one sub-cell of a converter cell according to the present disclosure. The control unit 110 may further comprise a memory module for storing information, at least temporarily. The control unit 110 may be adapted with control circuitry pertinent for controlling at least one aspect of at least one sub-cell of a converter cell as herein disclosed.

Fig. 13b illustrates a flow-chart of a method of isolating a sub-cell SB1 of a converter cell as herein disclosed. The method comprises: in the event of an internal fault of said sub-cell SB1 such as a short circuiting, isolating said sub-cell by: a step S1 of adjusting at least one primary protection element 12-1, 13-1, 14-1, connected to said sub-cell from closed circuit connection to open circuit connection; an optional step S2 of adjusting a main protection element 31 connected to said sub-cell SB1 from closed circuit connection to open circuit connection; an optional step S3 of adjusting at least one secondary protection element connected to said sub-cell SB1 from closed circuit connection to open circuit connection.

The method may comprise a step S0 of detecting an internal fault, such as a short-circuit, of said sub-cell SB1. Said step of isolating said sub-cell SB1 comprises: a step of controlling, based on a detection of said internal fault of said sub-cell, at least one protection element 12-1, 13-1, 14-1 to adjust said at least one protection element from closed circuit connection to open circuit connection. Said step of isolating said sub-cell may comprise: adjusting, in response to a short circuit, at least one protection element to adjust said at least one protection element to said open circuit connection.

Fig. 13 shows a graph illustrating a voltage measurement and a current measurement of a sub-cell of the converter cell wherein said sub-cell has been subjected to an internal fault resulting in a failure of one power converter module of IGBT-type. The full line shows a voltage between a collector and emitter of one switch of the power converter module. The dashed line shows the collector current. The dotted line shows the cross current measured in the main connection element. As illustrated, the collector current first surge upwards to 5000 A, then dips down to near 0 A, then stabilizes at a slightly elevated current magnitude relative pre-fault. Meanwhile, the voltage increases from near zero and stabilizes to around 2000 V. The cross-current shows a similar behavior as the collector current, but with more compressed swings and stabilizes just above 1500 A.

While the foregoing is directed to embodiments of the disclosure, other and further embodiments may be devised without parting from the inventive concept discussed herein. The scope of the invention is however determined by the claims.

## Claims

1. Converter cell, comprising:
- a first sub-cell (SB, SB1) and at least a second sub-cell (SB2, SB3, SB4), each sub-cell comprising:
∘ an energy storage module (ESM) comprising:
▪ a primary DC terminal (ESM+);
▪ a secondary DC terminal (ESM-),
∘ at least one power converter module (PCM) at least electrically connectable to:
▪ a primary DC connection terminal (DC+);
▪ a secondary DC connection terminal (DC-);
▪ at least a first AC connection terminal (AC+, AC-);
each sub-cell (SB, SB1, SB2, SB3, SB4) further comprising:
∘ a primary connection element (CE-1) configured to electrically connect the primary DC connection terminal (DC+) of the power converter module (PCM) with the primary DC terminal (ESM+) of said energy storage module (ESM);
∘ a secondary connection element (CE-2) configured to electrically connect the secondary DC connection terminal (DC-) of the power converter module (PCM) with the secondary DC terminal (ESM-) of said energy storage module (ESM);
wherein the converter cell is configured to connect to a main connection element (30), and further configured to, in response to an internal fault such as a short-circuiting, isolate at least one sub-cell of the first sub-cell (SB, SB1) and said at least a second sub-cell (SB2, SB3, SB4) by means of at least one protection element at least adjustable from a closed circuit connection to an open circuit connection, wherein said at least one protection element includes:
- a primary protection element (12-1, 13-1, 14-1, 23-1, 24-1, 34-1) configured to, in closed circuit connection, electrically connect the primary connection element of said at least one sub-cell and the primary connection element of one other of said first sub-cell (SB, SB1) and said at least a second sub-cell (SB2, SB3, SB4).

2. Converter cell according to claim 1, wherein at least one of the at least one power converter module (PCM) of at least one sub-cell (SB, SB1, SB2, SB3, SB4) is an IGBT-based power converter module, such as Si-IGBT-based power converter module or a MOSFET-based power converter module, such as a SiC-MOSFET-based power converter module.

3. Converter cell according to any of the preceding claims, wherein at least one sub-cell (SB1, SB2, SB3, SB4) comprises at least one additional power converter module, each of said at least one additional power converter module (PCM) is at least electrically connectable to:
- a primary DC connection terminal (DC+);
- a secondary DC connection terminal (DC-);
- at least a first AC connection terminal (AC+, AC-),
wherein said power converter module (PCM) of said at least one sub-cell and the at least one additional power converter module of said at least one sub-cell are connected in parallel.

4. Converter cell according to any preceding claims, wherein said at least one protection element includes:
- a main protection element (31, 32, 33, 34) configured to, in closed circuit connection, electrically connect the main connection element (30) and one of said at least a first AC connection terminal (AC+, AC-) of said at least one sub-cell.

5. Converter cell according to any preceding claims, wherein said at least one protection element includes:
- a secondary protection element (12-2, 13-2, 14-2, 23-2, 24-2, 34-2) configured to, in closed circuit connection, electrically connect the secondary connection element of said at least one sub-cell and the secondary connection element of one other of said first sub-cell (SB, SB1) and said at least a second sub-cell (SB2, SB3, SB4).

6. Converter cell according to any of claims, wherein said at least one main protection element (31, 32, 33, 34) and/or said at least one primary protection element (12-1, 13-1, 14-1, 23-1, 24-1, 34-1) and/or said at least one secondary protection element (12-2, 13-2, 14-2, 23-2, 24-2, 34-2) includes a protection element, which protection element is a single-use element, such as a fuse, a pyro switch, or a normally-on SiC JFET, or a multi-use element, such as a mechanical switch or a semiconductor switch.

7. Converter cell according to any of the preceding claims, said at least one primary protection element (12-1, 13-1, 14-1, 23-1, 24-1, 34-1) and/or said at least one secondary protection element (12-2, 13-2, 14-2, 23-2, 24-2, 34-2) comprises a protection element in series with a decoupling resistor and/or a decoupling impedance.

8. Converter cell according to any of the preceding claims, wherein said at least one main protection element (31, 32, 33, 34) and/or said at least one primary protection element (12-1, 13-1, 14-1, 23-1, 24-1, 34-1) and/or said at least one secondary protection element (12-2, 13-2, 14-2, 23-2, 24-2, 34-2) includes protection elements of the same type.

9. Converter cell according to any of the preceding claims, wherein at least one sub-cell (SB, SB1, SB2, SB3, SB4) is adapted to be protected by means of a crowbar thyristor connected in parallel with the energy storage module (ESM) and/or a bypass switch connected between the first AC connection terminal (AC+) and a second AC connection terminal (AC-) of the power converter module and/or a fuse connected in series with the energy storage module (ESM).

10. Converter cell according to any of the preceding claims, wherein at least one sub-cell (SB, SB1, SB2, SB3, SB4) is adapted to be protected by means of an explosion protective housing and/or at least two or more sub-cells (SB, SB1, SB2, SB3, SB4) are adapted to be protected by means of a common explosion protective housing.

11. Converter cell according to any of the preceding claims, wherein one or more of said at least one protection element is adapted to be controllable from said closed circuit connection to said open circuit connection in response to a control signal.

12. Modular power converter, comprising at least one converter cell according to any of the preceding claims.

13. Method of isolating a sub-cell (SB1) of a converter cell according to any of claims 1-11, the method comprising:
- in the event of an internal fault of said sub-cell (SB1) such as a short circuiting, isolating said sub-cell by:
• adjusting at least one primary protection element (12-1, 13-1, 14-1) connected to said sub-cell (SB1) from closed circuit connection to open circuit connection;
• optionally, adjusting a main protection element (31) connected to said sub-cell (SB1) from closed circuit connection to open circuit connection;
• optionally, adjusting at least one secondary protection element (12-2, 13-2, 14-2) connected to said sub-cell (SB1) from closed circuit connection to open circuit connection.

14. Method according to claim 13, comprising:
- detecting an internal fault, such as a short-circuit, of said sub-cell (SB1),
wherein said step of isolating said sub-cell (SB1) comprises:
- controlling, based on a detection of said internal fault of said sub-cell, at least one protection element (12-1, 13-1, 14-1) to adjust said at least one protection element from closed circuit connection to open circuit connection, and/or
- adjusting, in response to a short circuit, at least one protection element (12-1, 13-1, 14-1) to adjust said at least one protection element to said open circuit connection.

15. A control unit (110) configured to:
- receive an electrical signal at least indicating an internal fault, such as a short-circuit, of a sub-cell of a modular power converter according to any of claims 1-11;
- in response to said electrical signal, carry out the method according to any of claims 13-14.
